# FASCICULE DE BREVET EUROPEEN

(11) **EP 1 949 145 B1**
(45) Date de publication et mention de la délivrance du brevet: **28.07.2021**
(21) Numéro de dépôt: 06793747.4
(22) Date de dépôt: 22.09.2006
(51) Int. Cl.: B01L 3/00, B01F 5/06, B01F 13/00, G02B 3/14

(54) **PROCÉDÉ DE FABRICATION D'UN SYSTEME DIPHASIQUE LIQUIDE/LIQUIDE OU GAZ EN MICRO-FLUIDIQUE**
HERSTELLEN EINES ZWEIPHASEN-FLÜSSIGKEITS- BZW. FLÜSSIGKEITS- ODER GASSYSTEMS IN DER MIKROFLUIDIK
MAKING A TWO-PHASE LIQUID/LIQUID OR GAS SYSTEM IN MICROFLUIDICS

(30) Priorité: 22.09.2005 FR 0509693
(43) Date de publication de la demande: 30.07.2008
(73) Titulaire: Commissariat à l'Énergie Atomique et aux Énergies Alternatives, 75015 Paris (FR)
(72) Inventeur: RACCURT, Olivier, F-38730 Chelieu (FR); FOUILLET, Yves, F-38340 Voreppe (FR)
(74) Mandataire: Ahner, Philippe
(86) Numéro de dépôt international: PCT/EP2006/066629
(87) Numéro de publication internationale: WO 2007/033990

(56) Documents cités:
- EP-A- 1 293 807
- US-A- 5 659 330
- US-A1- 2004 196 525
- AGARWAL M ET AL: "Polymer-based variable focal length microlens system; Polymer-based variable focal length microlens system" JOURNAL OF MICROMECHANICS & MICROENGINEERING, INSTITUTE OF PHYSICS PUBLISHING, BRISTOL, GB, vol. 14, no. 12, 1 décembre 2004 (2004-12-01), pages 1665-1673, XP020069594 ISSN: 0960-1317 cité dans la demande
- BERGE B ET AL: "Variable focal lens controlled by an external voltage: an application of electrowetting", EUROPEAN PHYSICAL JOURNAL E. SOFT MATTER, EDP SCIENCES, IT, vol. 3, no. 2, 1 October 2000 (2000-10-01) , pages 159-163, XP002285977, ISSN: 1292-8941, DOI: 10.1007/S101890070029

## Description

### DOMAINE TECHNIQUE

L'invention concerne un procédé de fabrication d'un système diphasique liquide / liquide ou gaz en micro-fluidique.

Un tel procédé permet notamment la réalisation de lentilles liquides à focale variable.

### ÉTAT DE LA TECHNIQUE ANTÉRIEURE

Actuellement, les lentilles liquides sont fabriquées en injectant directement de l'huile dans de l'eau. Il n'existe semble-t-il pas de méthode micro-fluidique pour fabriquer ce type d'inclusion. Une explication du fonctionnement d'une lentille liquide à focale variable est donnée dans le document « Variable focal lens controlled by an external voltage : An application of electrowetting » de B. BERGE ET J. PESEUX, Eur. Phys. J. E3, 159-163 (2000). Cependant, ce document divulgue un mode de réalisation macroscopique.

Les lentilles à focale variable fabriquées en micro-technologies utilisent généralement la déformation de membranes solides ou liquides par augmentation ou diminution de la pression. A propos de cette technique, on peut se référer aux documents suivants :
- « Tunable microdoublet lens array » de Ki-Hun JEONG et al., Optics Express, Vol.12, N°11, p.2494 à 2501, 31 mai 2004 ;
- « Polymer-based variable focal length microlens systems » de M. AGARWAL et al., J. Micromech. Microeng., Vol. 14, 2004, p. 1665 à 1673 ;
- « Variable-focusing microlens with microfluidic chip » de J. CHEN et al., J. Micromech. Microeng., Vol. 14, 2004, p. 675 à 680 ;
- « A variable focus lens with 1 kHz bandwidth applied to axial-scan of a confocal scanning microscope » de H. OKU et al., Proceedings of the 16th Annual Meeting of the IEEE Lasers & Electro-optics Society (LEOS) 2003, Tucson, USA, 26-30 octobre 2003 ;

Le document EP1293807 divulgue une microlentille liquide contrôlable à électromouillage assisté par lubrification.

### EXPOSÉ DE L'INVENTION

La présente divulgation décrit un dispositif de fabrication d'un système diphasique liquide / liquide ou gaz dont la particularité est de pouvoir être fabriqué par les microtechnologies. Ce dispositif permet notamment de réaliser une lentille liquide à focale variable. Il peut cependant être utilisé à d'autres fins, c'est-à-dire dans les cas où il est nécessaire de former une inclusion d'un liquide ou d'un gaz dans une goutte d'un autre liquide.

L'invention a pour objet un procédé de fabrication d'un système diphasique liquide/liquide ou gaz utilisant un premier liquide ou un gaz et un deuxième liquide non miscibles entre eux, le procédé étant conforme à la revendication 1.

Des variantes de mise en œuvre sont définies par les revendications dépendantes 2-17.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- les figures 1A à 1D sont des vues en coupe transversale d'un dispositif utilisable dans le procédé selon l'invention, en cours de fonctionnement,
- la figure 2 est une vue de dessus d'un substrat support utilisable pour la réalisation d'un dispositif utilisable dans le procédé selon l'invention,
- les figures 3A à 3E sont des vues de dessus d'un dispositif utilisable dans le procédé selon l'invention, en cours de fonctionnement,
- la figure 4 est une vue de dessus d'un autre substrat support utilisable pour la réalisation d'un dispositif utilisable dans le procédé selon l'invention,
- la figure 5 est une vue de dessus d'un dispositif utilisable dans le procédé selon l'invention, ce dispositif permettant la fabrication de plusieurs lentilles liquides à l'aide d'une seule cellule de fabrication,
- la figure 6 est une vue de dessus d'un dispositif utilisable dans le procédé selon l'invention, ce dispositif permettant la fabrication de plusieurs lentilles liquides à l'aide de plusieurs cellules de fabrication,
- les figures 7A et 7B sont des vues en coupe transversale d'une cellule élémentaire de papier électronique,
- les figures 8A à 8E sont des vues en coupe transversale d'un dispositif permettant une double inclusion selon l'invention, en cours de fonctionnement,
- les figures 9A à 9E sont des vues en coupe transversale d'un autre dispositif permettant une double inclusion selon l'invention, en cours de fonctionnement,
- les figures 10A à 10C sont des vues en coupe transversale d'encore un autre dispositif permettant une double inclusion selon l'invention, en cours de fonctionnement,
- les figures 11A à 11E sont des vues de dessus d'un dispositif utilisable dans le procédé selon l'invention en cours de fonctionnement,
- la figure 12A est une vue de dessus d'un dispositif utilisable dans le procédé selon l'invention et les figures 12B et 12C sont des vues en coupe transversale de ce dispositif en cours de fonctionnement,
- les figures 13A et 13B sont des vues de dessus d'un dispositif utilisable dans le procédé selon l'invention, permettant de réaliser une matrice d'inclusions, en cours de fonctionnement,
- les figures 14A à 14C sont des vues de dessus d'un dispositif utilisable dans le procédé selon l'invention en cours de fonctionnement,
- la figure 15 est une vue en coupe transversale d'un dispositif utilisable dans le procédé selon l'invention permettant le déplacement de billes par effet d'entraînement.

### EXPOSÉ DÉTAILLÉ DE MODES DE RÉALISATION PARTICULIERS

Dans le dispositif micro-fluidique utilisable dans le procédé selon la présente invention, le déplacement de la goutte sur la surface du substrat support peut être obtenu de différentes manières. On peut par exemple utiliser un système de pompe. Dans la suite de la description, l'invention sera mise en œuvre au moyen d'un dispositif exploitant l'effet d'électromouillage sur diélectrique ou effet EWOD (pour « Electro-Wetting On Dielectric).

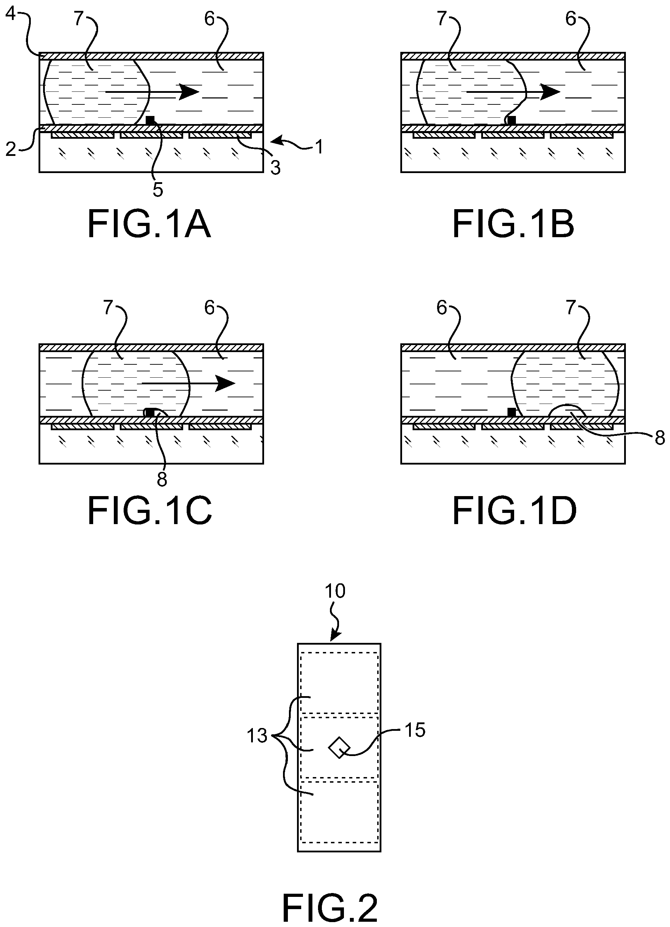

Les figures 1A à 1D sont des vues en coupe transversale d'un dispositif utilisant l'effet EWOD.

La figure 1A montre un substrat support 1 constitué d'une ou de deux couches 2 en matériau diélectrique et hydrophobe sous laquelle sont disposées des électrodes 3 se succédant selon un trajet. Un capot 4 est disposé au-dessus du substrat support 1 et parallèlement au substrat support. Le capot 4 et le substrat support 1 définissent entre eux un espace de confinement. Le capot 4 est recouvert, côté intérieur au dispositif, d'une couche électriquement conductrice et d'une couche hydrophobe qui est en contact avec les liquides.

Le substrat support 1 comporte, côté intérieur au dispositif, un défaut de mouillage 5. A noter que le défaut de mouillage pourrait se trouver sur le capot 4, côté intérieur au dispositif.

L'espace de confinement du dispositif est rempli d'un premier liquide formant une couche 6 dans cet espace. Une goutte 7 d'un deuxième liquide, non miscible dans le premier liquide, est disposée dans la couche 6, enserrée entre le substrat support 1 et le capot 4. A titre d'exemple, le premier liquide peut être de l'huile et le deuxième liquide de l'eau. Le premier liquide peut également être remplacé par un gaz tel que l'air.

Le déplacement de la goutte se fait par activation successive des électrodes, en utilisant l'effet d'électromouillage : la surface hydrophobe devient hydrophile au-dessus de l'électrode quand un champ électrique est appliqué.

La formation de l'inclusion d'huile dans la goutte d'eau se fait de la façon suivante, en relation avec les figures 1A à 1D. Lorsque la goutte 7, qui est déplacée dans le sens de la flèche, passe sur le défaut 5, il y a rupture de la ligne triple de contact de la goutte sur la surface du substrat support, ce qui provoque la création d'une inclusion 8 du milieu ambiant (l'huile) dans la goutte d'eau. La taille de l'inclusion peut être contrôlée par la forme du défaut, par la vitesse de déplacement de la goutte, par la tension interfaciale et le rapport de viscosité entre les deux liquides, ainsi que par l'angle de contact apparent de la goutte sur la surface du substrat et sur le défaut. Le défaut peut se présenter sous une forme physique (protubérance comme sur les figures 1A à 1D) ou sous la forme d'un défaut de mouillage (partie hydrophobe au milieu d'une surface hydrophile).

Ce dispositif permet de fabriquer des inclusions à volonté et de façon reproductible. En effet, le volume de l'inclusion peut être parfaitement contrôlable par les paramètres cités précédemment. Par ailleurs, on sait former une goutte en système fermé dans l'huile avec un très bon contrôle du volume.

Une application particulièrement intéressante de l'invention est la réalisation en série de lentilles liquides pour des dispositifs micro-technologiques.

Les méthodes de fabrication du dispositif sont celles habituellement utilisées pour la réalisation de dispositifs EWOD, à savoir essentiellement, mais pas exclusivement, les microtechnologies telles que le dépôt de couche minces, la photolithographie, la gravure, etc... Les technologies habituellement utilisées pour la fabrication de dispositifs microfluidiques représentent également un mode de réalisation possible d'un tel dispositif.

De façon plus précise, le dispositif nécessite l'utilisation d'un support plan permettant sa réalisation. Le support doit être rigide ou rendu rigide lors de la fabrication des inclusions afin de garantir sa planéité et le contrôle des dimensions caractéristiques du dispositif telles que l'espacement et la taille des électrodes, l'espacement entre la couche diélectrique et hydrophobe 2 (voir la figure 1A) et le capot 4. A titre d'exemple, la couche 2 peut être une tranche de silicium, de verre ou de plastique, mais pas exclusivement. Dans le cas d'un support en silicium ou en verre, les techniques des microtechnologies (photolitographie, dépôt, gravure, etc...) sont directement applicables. Dans le cas d'autres supports, des technologies alternatives peuvent être utilisées tant qu'elles permettent d'obtenir le résultat souhaité.

Plus particulièrement concernant la nature et le mode de fabrication du défaut. Celui-ci peut être soit un défaut de nature topologique (géométrique) soit un défaut de mouillage de la surface en contact avec la goutte.

Dans le cas ou le défaut est de nature topologique, celui-ci peut soit représenter une surélévation locale, par rapport à la surface de la couche diélectrique, hydrophobe tel qu'il est représenté sur les figures 1A à 1D, soit un trou. La caractéristique importante du défaut est qu'il génère une rupture de la ligne triple de contact de la goutte sur la surface comportant le défaut de mouillage lors du passage de la goutte. Cette rupture de la ligne triple permet le piégeage d'une goutte du liquide 6 à l'intérieur de la goutte 7 formant ainsi une inclusion 8.

Dans le cas d'un défaut de nature topologique, le mode de réalisation peut utiliser les techniques de photolithographie couplées à des techniques de dépôt et de gravure ou, dans le cas d'une surélévation locale, d'un report direct du défaut par collage de celui-ci. Dans le cas d'un trou, des techniques de gravure sèche ou humide couplées à la photolithographie ou bien par usinage direct peuvent être envisagées.

Il est possible d'envisager le défaut de topologie comme une augmentation importante de la rugosité de surface entraînant une augmentation suffisante de l'angle de contact et donc la rupture locale de la ligne triple entre le premier liquide, le deuxième liquide et le substrat (au niveau du défaut) lors du passage de la goutte.

La forme et la nature hydrophile ou hydrophobe du défaut doit permettre de contrôler le volume de l'inclusion ainsi que la vitesse de déplacement de la goutte dans le dispositif.

Il est possible d'obtenir les mêmes effets en utilisant un défaut de mouillage plutôt qu'un défaut topologique. Dans ce cas, ce défaut de mouillage se caractérise par une zone de mouillabilité différente du voisinage immédiat autour du défaut. C'est-à-dire que l'angle de contact de la goutte à cet endroit, c'est-à-dire au niveau du défaut de mouillage, doit être supérieur à l'angle de contact autour du défaut, par exemple supérieur à 90° alors qu'autour il doit être très inférieur à 90° lors du passage de la goutte. L'obtention de cette différence de mouillabilité peut s'obtenir par une modification permanente de la nature chimique de la surface à cet endroit afin de la rendre hydrophobe. Dans ce cas, le défaut doit rester suffisamment hydrophobe même en présence de la tension d'activation des électrodes lors du déplacement de la goutte par électromouillage. Cela peut être réalisé également par un motif spécifique d'électrode prévoyant une électrode spécifique au défaut incluse dans l'électrode permettant le déplacement ou même une absence d'électrode.

Il est possible également de créer un défaut de mouillage par une action extérieure telle que l'augmentation ou la diminution locale de la température (modification de la tension interfaciale par la variation de température) ou bien par photo-activation d'une surface à l'aide d'un dépôt photosensible qui lorsqu'il reçoit une impulsion lumineuse change sa nature hydrophile ou hydrophobe.

On peut également imaginer décoller la ligne triple localement au niveau du défaut en faisant vibrer la surface par exemple à l'aide d'un élément piézoélectrique. Dans ce cas l'élément piézoélectrique serait mis en vibration (effet piézoélectrique) afin de créer un décollement local de la ligne triple de la goutte et créer ainsi une inclusion d'huile.

L'emplacement du défaut de mouillage peut se situer au milieu d'une électrode ou entre deux électrodes.

La figure 2 est une vue de dessus d'un substrat support 10 utilisable pour la réalisation d'un dispositif utilisable dans le procédé selon l'invention. Des électrodes 13 sont disposées sous le substrat support 10. Le substrat support 10 présente un défaut de mouillage 15 localisé au centre d'une électrode. Le défaut de mouillage 15 peut être situé sur la surface d'une couche diélectrique hydrophobe déposée sur le substrat support destinée à être en contact avec les liquides (cas d'un défaut de nature topologique ou d'un défaut de mouillage surfacique) ou sous la couche diélectrique hydrophobe (électrode supplémentaire ou absence d'électrode) ou à la fois sur le substrat et sous le substrat support (cas d'une combinaison de moyens).

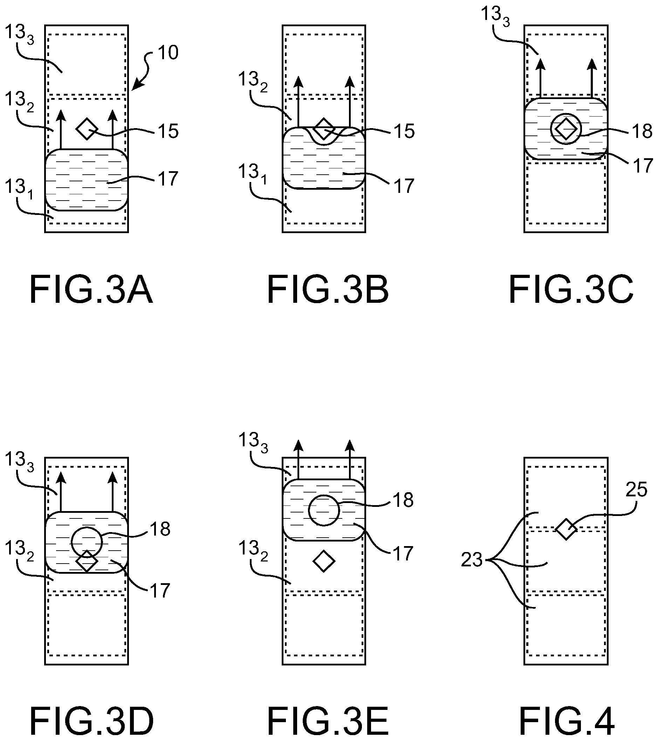

Les figures 3A à 3E sont des vues de dessus d'un dispositif utilisable dans le procédé selon l'invention, en cours de fonctionnement. Le capot a été omis par souci de simplification. Le substrat support 10 est celui représenté à la figure 2. Les électrodes sont référencées 13₁, 13₂ et 13₃ dans le sens d'avancement de la goutte 17 qui se déplace sur le substrat support au sein de l'autre liquide. A la figure 3A, l'activation électrique fait passer la goutte 17 de l'électrode 13₁ à l'électrode 13₂ au centre de laquelle est localisé le défaut 15. En abordant le défaut, la ligne triple de contact de la goutte sur la surface hydrophobe se rompt (voir la figure 3B) et une micro-goutte 18 de la couche de liquide est incluse dans la goutte 17 qui continue sa progression vers l'électrode 13₃ (voir la figure 3C). Les figures 3D et 3E montrent la goutte 17 en progression vers l'électrode 13₃ en emportant l'inclusion sous la forme de la micro-goutte 18.

La figure 4 est une vue de dessus d'un autre substrat support 20 utilisable pour la réalisation d'un dispositif utilisable dans le procédé selon l'invention. Des électrodes 23 sont disposées sous le substrat support 20. Le substrat support 20 présente un défaut de mouillage 25 localisé cette fois entre deux électrodes successives 23. Comme précédemment, le défaut peut être présent sous le substrat support, sur le substrat support ou à la fois en-dessous et au-dessus.

Le premier avantage de l'invention est de pouvoir fabriquer une inclusion d'un premier liquide dans une goutte d'un deuxième liquide baignant elle-même dans le premier liquide, permettant ainsi de créer l'élément de base à la fabrication de lentille liquide à focale variable.

La fabrication est effectuée par le dispositif lui-même, ce qui est un énorme avantage notamment pour la fabrication en grande quantité de lentilles liquides. Ce dispositif de fabrication peut être réalisé avec les microtechnologies permettant ainsi sa miniaturisation. Il peut ainsi s'insérer comme une partie d'un dispositif plus complet de système optique comportant des lentilles liquides à focale variable en dispositif microfluidique. D'autre part, la méthode de fabrication de l'inclusion constituant la lentille liquide n'est dépendante que de la géométrie, des matériaux, de la conception du dispositif et bien sûr des deux liquides non miscibles utilisés. Cela veut dire que pour un dispositif et un couple de liquides donnés, il est possible d'avoir une très bonne reproductibilité dans la fabrication de ces inclusions. Enfin, le système permet de fabriquer autant d'inclusions que l'on veut et a priori du volume que l'on veut. En effet, celui-ci est contrôlé par des paramètres ajustables tel que la vitesse de déplacement, l'angle de contact lors du déplacement, la différence d'angle de contact entre le défaut et son voisinage immédiat et enfin la morphologie du défaut.

La première application de ce dispositif concerne la fabrication de lentilles liquides à focale variable décrite dans l'article de BERGE et PESEUX cité plus haut. Ces dispositifs sont composés d'une goutte d'huile piégée dans de l'eau (ou inversement) dont on fait varier la forme (et donc la focale) en modifiant l'angle de contact de la goutte par électromouillage. L'invention décrite ici permet de fabriquer l'élément de base de ces lentilles à focale variable (une goutte d'un premier liquide piégée dans une goutte plus grosse d'un deuxième liquide elle-même baignant dans le premier liquide).

Ce dispositif permet de fabriquer à volonté autant de lentilles liquides que l'on veut car c'est le composant lui-même qui contrôle la taille de l'inclusion et de la goutte par la forme et la nature du défaut, la vitesse de déplacement, le type de surface, etc...

Dans ce cas, si l'on veut faire une ou plusieurs lentilles liquides ou inclusions identiques, il suffit :
- soit de faire passer par un même dispositif plusieurs gouttes afin de former autant de lentilles que l'on veut. Ces lentilles sont ensuite amenées aux endroits appropriés en déplaçant la grosse goutte par électromouillage comme décrit dans les technologies EWOD connues de l'homme de l'art ;
- soit de placer sur la puce juste avant l'endroit où doit fonctionner la lentille à focale variable un dispositif de fabrication décrit sur les figures 1A à 1D, 2 et 4.

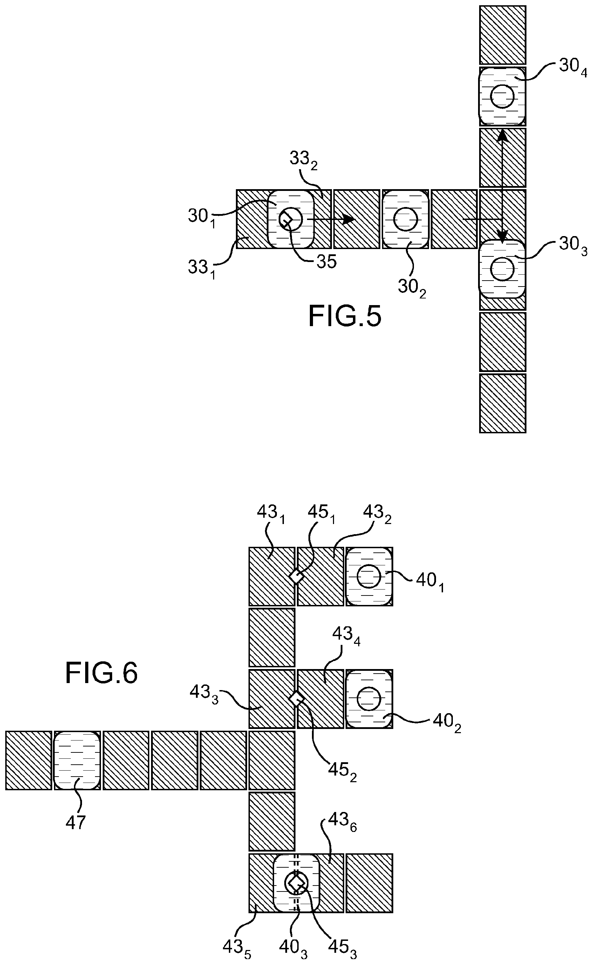

La figure 5 est une vue de dessus schématique d'un dispositif utilisable dans le procédé selon l'invention permettant la fabrication de plusieurs lentilles liquides à l'aide d'une seule cellule de fabrication, comme indiqué ci-dessus. Sur cette figure, par souci de simplification, on n'a représenté que les électrodes 33 disposées sous le substrat support et un défaut de mouillage. Une cellule de fabrication de lentilles liquides est réalisée par la présence d'un défaut de mouillage 35 entre deux électrodes 33₁ et 33₂. La figure 5 montre la formation d'une lentille liquide à focale variable 30₁ en cours de fabrication. Une lentille liquide 30₂, réalisée juste avant la lentille liquide 30₁, est en cours de progression. Les lentilles liquides peuvent être dirigées vers une première direction (celle correspondant à la lentille liquide 30₃) ou une deuxième direction (celle correspondant à la lentille liquide 30₄).

La figure 6 est une vue de dessus schématique d'un dispositif utilisable dans le procédé selon l'invention permettant la fabrication de plusieurs lentilles liquides à l'aide de plusieurs cellules de fabrication comme indiqué ci-dessus. Sur cette figure, par souci de simplification, on n'a représenté que les électrodes 43 disposées sous le substrat support et des défauts de mouillage 45. Les défauts de mouillage 45₁, 45₂ et 45₃ sont localisés entre des électrodes, respectivement 43₁ et 43₂, 43₃ et 43₄, 43₅ et 43₆. Ils forment autant de cellules de fabrication. Les gouttes de liquide 47 progressent par électromouillage sur le trajet qui leur est affecté et passent dans l'une des trois cellules de fabrication. La figure 6 montre deux lentilles liquides à focale variable 40₁ et 40₂ déjà fabriquées et une troisième liquide 40₃ en cours de fabrication.

Une autre application intéressante de ce dispositif est la fabrication de cellules élémentaires pour ce que l'on appelle le papier électronique fonctionnant avec des gouttes de liquide coloré (rouge, bleu et jaune) dans une autre phase liquide non miscible et incolore dont on fait varier la forme afin d'avoir une transmission (ou une réflexion) de la lumière arrivant sur la goutte. Concernant le papier électronique, on peut se référer aux articles « Démonstration of fluorescent RGB electrowetting devices for light wave-coupling displays » de J. HEIKENFELD et al., Proc. Electroluminescence 2004, p. 302 à 305, Toronto, Canada, septembre 2004, et « Video-speed electronic paper based on electrowetting » de R. A. HAYES et al., Nature, Vol. 425, 25 septembre 2003. La variation de la forme de la goutte utilise l'électromouillage : si la goutte est étalée, la cellule apparaît de couleur, si elle est rétractée la cellule n'a pas de couleur.

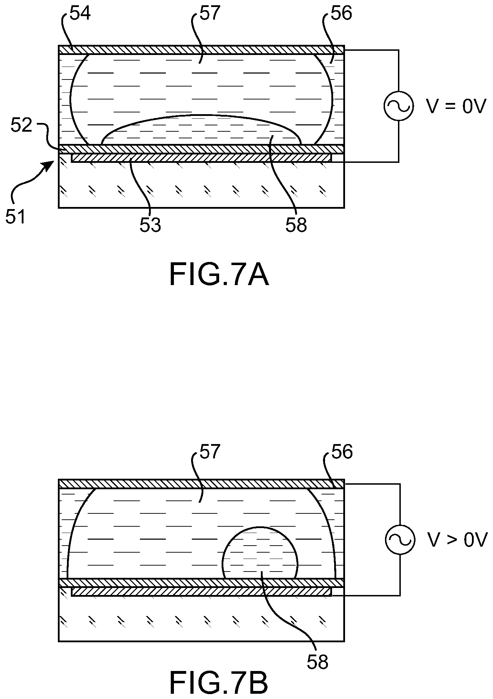

Comme pour les lentilles à focale variable la présente invention permet de fabriquer le système de goutte de façon reproductible et, contrôlé pour ensuite aller les placer à l'endroit désiré à l'aide d'une matrice d'électrode et former ainsi les cellules élémentaires de ces dispositifs. Une telle cellule élémentaire est représentée sur les figures 7A et 7B.

Les « papiers électroniques » sont formés d'une matrice de ces cellules commandées individuellement. La lumière pouvant venir par le dessus ou par le dessous, les parois situées sur le trajet de la lumière sont transparentes.

La cellule représentée sur les figures 7A et 7B comprend un substrat support 51 constitué d'une couche 52 en matériau diélectrique et hydrophobe sous laquelle est disposé une électrode 53. Un capot 54 est disposé en regard du substrat support 51 et parallèlement au substrat support. Le capot 54 est recouvert, côté intérieur à la cellule, d'une couche électriquement conductrice et d'une couche hydrophobe qui est en contact avec la couche de premier liquide 56 et avec la goutte de deuxième liquide 57. La goutte 57 comprend une inclusion de liquide 58. Le premier liquide peut être de l'huile, le deuxième liquide peut être de l'eau. Le liquide 58 peut être de l'huile colorée. Le système diphasique 57/58 a été fabriqué en aval de la cellule, dans un dispositif comprenant comme premier liquide de l'huile colorée formant une couche, le deuxième liquide étant de l'eau. Le système diphasique 57/58 est ensuite véhiculé par électromouillage vers une cellule élémentaire de papier électronique.

En l'absence de tension électrique appliquée entre l'électrode du capot 54 et l'électrode 53, la micro-goutte d'huile colorée 58 est étalée et le pixel apparaît coloré (figure 7A). Lorsqu'une tension électrique de commande est appliquée, la micro-goutte d'huile colorée 58 se rétracte et la cellule (ou pixel) apparaît sans couleur (figure 7B).

On a présenté ci-dessus, à titre d'exemple, un procédé et un dispositif permettant d'obtenir une inclusion d'un liquide dans une goutte. On peut ainsi obtenir une inclusion d'huile dans une goutte d'eau baignant elle-même dans de l'huile (ou tout autre couple de liquides non miscibles). Or, il est possible d'obtenir au moins deux inclusions composées de deux liquides différents dans la goutte (par exemple une goutte d'eau dans un bain d'huile), possédant en son sein deux inclusions de liquides non miscibles de telle sorte qu'une inclusion se trouve en bas de la goutte, sur la surface inférieure, et qu'une autre inclusion se trouve en haut, sur la surface supérieure.

Plusieurs solutions sont possibles pour obtenir deux inclusions dans la goutte. Dans tous les cas, il faut que les moyens permettant l'inclusion soient présents à la fois sur la surface interne inférieure et sur la surface interne supérieure du dispositif.

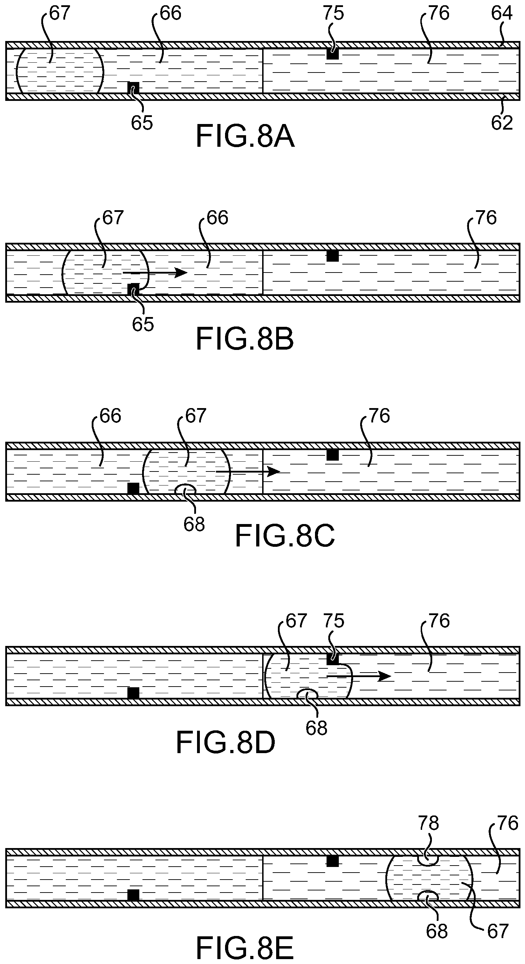

Selon un premier mode de réalisation, illustré par les figures 8A à 8E, la double inclusion est obtenue par passage dans deux bains successifs de liquides non miscibles. Ces figures sont des vues schématiques permettant d'expliquer le fonctionnement du dispositif.

Le dispositif des figures 8A à 8E comprend deux couches 62 et 64 en matériau diélectrique et hydrophobe, disposées en vis-à-vis et écartées d'une distance permettant le confinement d'un liquide 66 (par exemple une première huile) dans la partie gauche du dispositif et d'un liquide 76 (par exemple une deuxième huile non miscible avec la première) dans la partie droite du dispositif. La couche inférieure 62 présente un défaut de mouillage 65 dans la partie gauche du dispositif. La couche supérieure 64 présente un défaut de mouillage 75 dans la partie droite du dispositif. Une goutte 67 d'un autre liquide non miscible avec les deux huiles, par exemple de l'eau, est introduite dans la partie gauche du dispositif.

La goutte 67 est déplacée de la partie gauche vers la partie droite du dispositif (voir les figures 8B à 8D) pour parvenir à la position illustrée par la figure 8E. Les moyens de déplacement possibles pour la goutte ont été divulgués plus haut et n'ont pas été représentés sur les figures 8A à 8E.

La goutte 67 passe au niveau du défaut de mouillage 65 où il se crée une inclusion 68 sur la surface inférieure. La goutte 67 progresse vers le liquide 76, y pénètre et passe au niveau du défaut de mouillage 75 où il se crée une inclusion 78 sur la surface supérieure. La figure 8E montre la goutte 67 pourvue des inclusions opposées 68 et 78.

Selon un autre mode de réalisation la double inclusion est obtenue en utilisant deux liquides non miscibles et de densités différentes. Dans ce cas, il est possible de créer deux inclusions opposées au même endroit du dispositif ou à deux endroits différents du dispositif.

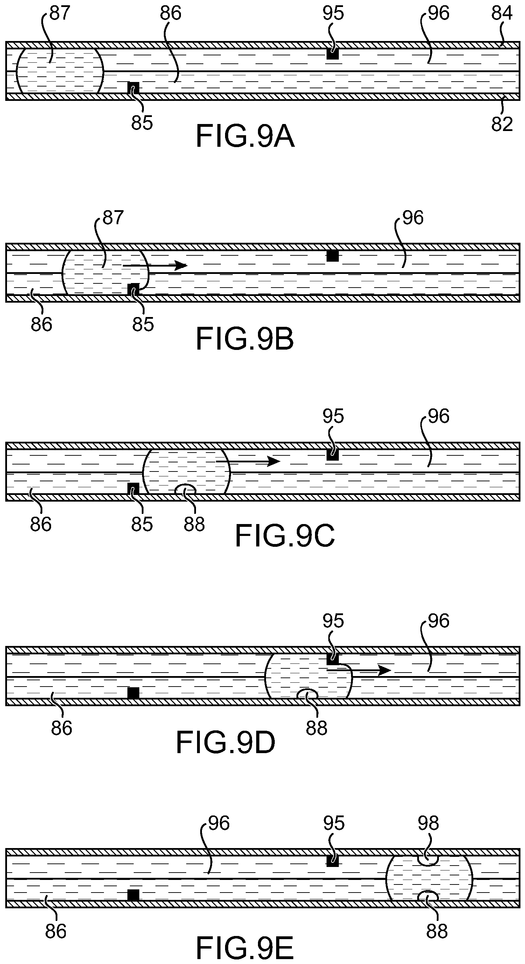

Le dispositif illustré par les figures 9A à 9E permet la création de deux inclusions opposées à deux endroits différents du dispositif. Il comprend deux couches 82 et 84 en matériau diélectrique et hydrophobe, disposées en vis-à-vis et écartées d'une distance permettant le confinement d'un liquide 86 (par exemple une première huile) dans la partie inférieure du dispositif et d'un liquide 96 (par exemple une deuxième huile non miscible avec la première et de plus faible densité) dans la partie supérieure du dispositif. La couche inférieure 82 présente un défaut de mouillage 85 et la couche supérieure 84 présente un défaut de mouillage 95, les deux défauts de mouillage étant décalés l'un de l'autre dans le sens de déplacement de la goutte 87 qui est en un liquide non miscible avec les deux huiles.

La goutte 87 est déplacée de la partie gauche vers la partie droite du dispositif (voir les figures 9B à 9D) pour parvenir à la position illustrée par la figure 9E. Les moyens de déplacement possibles pour la goutte ont été divulgués plus haut et n'ont pas été représentés sur les figures 9A à 9E.

La goutte 87 passe au niveau du défaut de mouillage 85 où il se crée une inclusion 88 sur la surface inférieure. La goutte 87 passe ensuite au niveau du défaut de mouillage 95 où il se crée une inclusion 98 sur la surface supérieure. La figure 9E montre la goutte 87 pourvue des inclusions opposées 88 et 98.

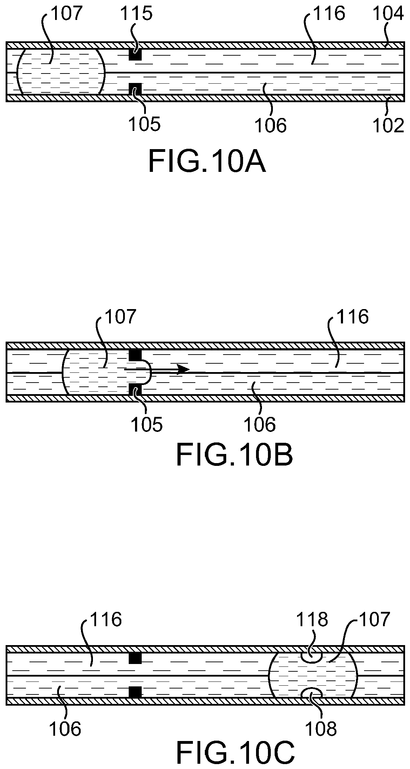

Le dispositif illustré par les figures 10A à 10C permet la création de deux inclusions opposées au même endroit du dispositif. Il comprend deux couches 102 et 104 en matériau diélectrique et hydrophobe, disposées en vis-à-vis et écartées d'une distance permettant le confinement d'un liquide 106 et d'un liquide 116, comme pour le mode de réalisation précédent. La couche inférieure 102 présente un défaut de mouillage 105 et la couche supérieure 84 présente un défaut de mouillage 115, les deux défauts de mouillage permettant la création d'inclusions au même niveau.

La goutte 107 est déplacée de la partie gauche vers la partie droite du dispositif (voir les figures 10A à 10C). Les moyens de déplacement possibles pour la goutte ont été divulgués plus haut et n'ont pas été représentés sur les figures 10A à 10C.

La goutte 107 passe simultanément au niveau des défauts de mouillage 105 et 115 où il se crée des inclusions 108 et 118. La figure 10C montre la goutte 107 pourvue des inclusions opposées 108 et 118.

Le fait d'avoir deux inclusions opposées (l'une en haut et l'autre en bas de la goutte) présente l'avantage que, si on utilise deux huiles colorées de couleurs différentes, on obtient un système avec deux inclusions de couleurs différentes dans la même goutte. Ceci est intéressant pour des systèmes optiques tels que le papier électronique.

Un autre avantage est purement optique : deux inclusions situées l'une en face de l'autre permettent la formation d'une lentille double. On a vu précédemment qu'une inclusion d'un liquide dans une goutte sert de système de base aux lentilles liquides à focale variable. Avec un tel dispositif, les deux inclusions forment deux lentilles dont on peut faire varier la focale par un dispositif d'électromouillage. La variation de la focale de chaque inclusion par électromouillage peut se faire de façon identique ou de façon indépendante.

Les exemples de réalisation décrits ci-dessus mentionnent un déplacement de l'inclusion après sa formation. Cependant, suivant la nature du défaut et des liquides utilisés, l'inclusion peut rester fixe après sa formation. L'inclusion est dans ce cas automatiquement positionnée sur le défaut. Elle disparaît quand la goutte se déplace à nouveau sur une autre électrode.

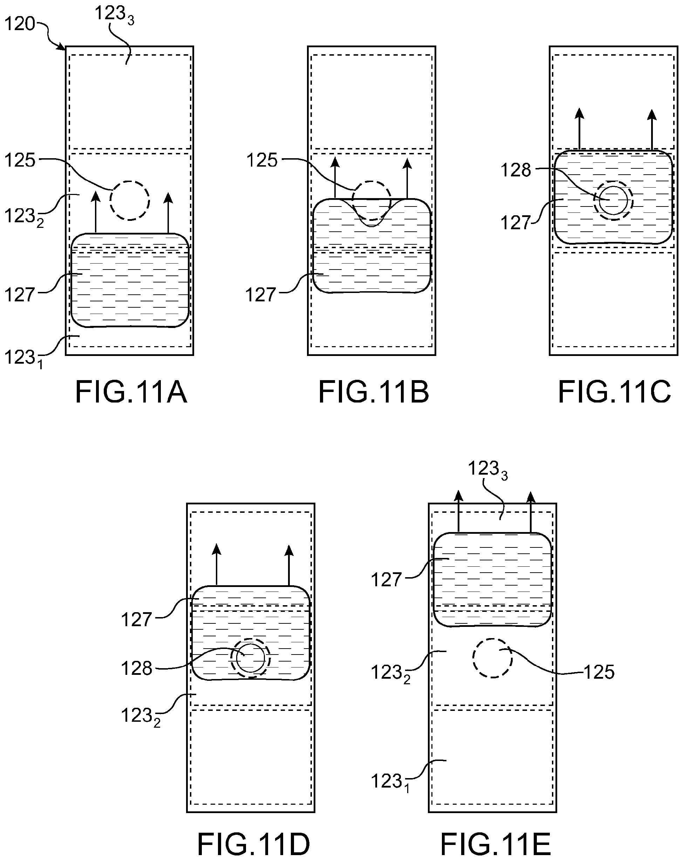

Les figures 11A à 11E sont des vues de dessus d'un dispositif utilisable dans le procédé selon l'invention dans lequel le défaut de mouillage est un trou circulaire prévu dans l'une des électrodes. Le capot a été omis par souci de simplification. Le substrat support 120 supporte, de manière intégrée comme précédemment, des électrodes dont seulement trois sont représentées : les électrodes 123₁, 123₂ et 123₃. L'électrode 123₂ possède un trou circulaire central 125 constituant le défaut de mouillage. La goutte 127 est déplacée de l'électrode 123₁ (voir la figure 11A) vers l'électrode 123₃ (voir la figure 11 E) au sein de l'autre liquide. En abordant le défaut, une micro-goutte 128 de la couche de liquide environnante est incluse dans la goutte 127 (voir la figure 11C). La goutte 127 continuant son déplacement (voir la figure 11D), la micro-goutte 128 demeure sur le trou 125 de l'électrode 123₂. Lorsque la goutte 127 passe sur l'électrode 123₃, l'inclusion a réintégré la couche de liquide environnante (voir la figure 11 E).

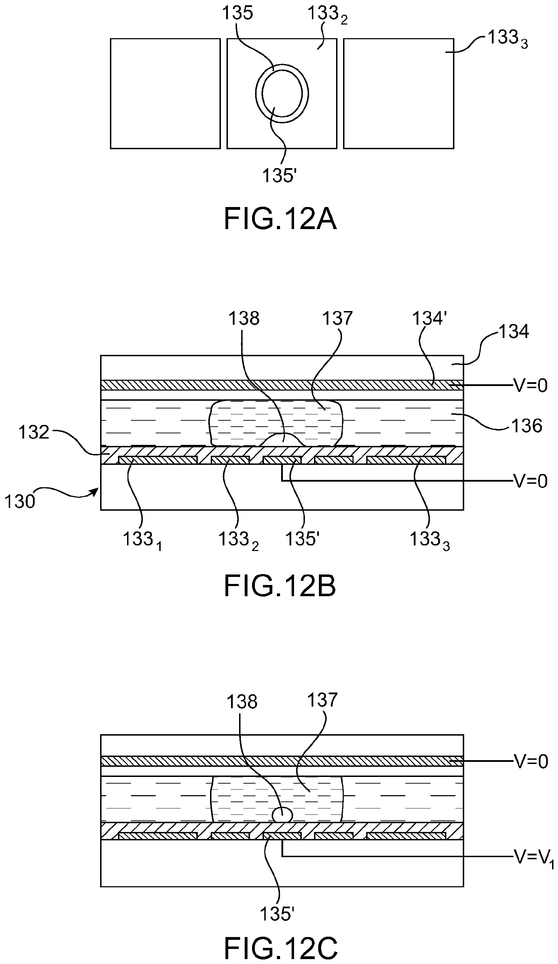

Dans le cas d'un défaut réalisé par un trou dans une électrode, il est possible d'ajouter une autre électrode dans ce trou. Les figures 12A à 12C illustrent une telle configuration.

La figure 12A est une vue de dessus de quelques électrodes de ce dispositif. On y voit trois électrodes 133₁, 133₂ et 133₃ alignées dans le sens d'avancement d'une goutte. L'électrode 133₂ possède un trou circulaire central 135 dans lequel est logé une électrode 135' qui peut être portée à un potentiel différent de l'électrode 133₂ pour provoquer un défaut de mouillage.

Les figures 12B et 12C sont des vues en coupe transversale du dispositif. On y voit un substrat support 130 supportant les électrodes 133₁, 133₂ et 133₃ englobées dans une couche 132 en matériau diélectrique et hydrophobe. On a représenté également un capot 134 englobant une électrode unique 134' portée au potentiel de la masse (V=0) et une goutte 137 de liquide véhiculée au sein d'une couche d'un autre liquide 136. La figure 12B représente la goutte 137 parvenue sur l'électrode 133₂ en provoquant l'inclusion d'une micro-goutte 138 lorsque l'électrode 135' n'est pas activée (V=0). Le fait de ne pas activer l'électrode 135' correspond au cas où il n'y a pas d'électrode particulière, comme pour le dispositif précédent. La micro-goutte 138 se fixe et se centre automatiquement sur l'électrode 135'. En activant l'électrode 135' (V=V1), comme illustré sur la figure 12C, indépendamment des autres électrodes, on peut faire varier la forme de l'inclusion 138 par électromouillage.

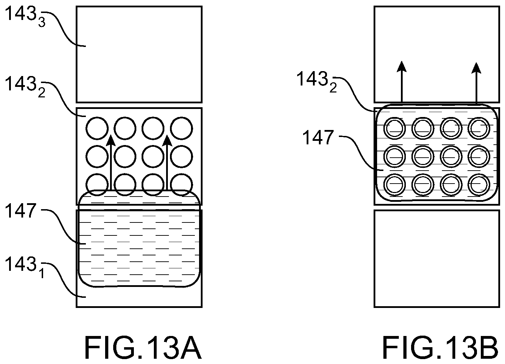

En disposant plusieurs défauts de mouillage dans une même électrode, on peut réaliser une matrice d'inclusions en un seul déplacement de la goutte. Les figures 13A et 13B sont des vues de dessus qui illustrent cette mise en œuvre. Sur ces figures, le substrat support n'a pas été représenté. On y voit trois électrodes 143₁, 143₂ et 143₃ alignées dans le sens d'avancement d'une goutte. L'électrode 143₂ possède une matrice de douze trous (ou défauts) disposés sur trois lignes et quatre colonnes. La goutte 147 est déplacée de l'électrode 143₁ vers l'électrode 143₃ (voir la figure 13A). La figure 13B montre la goutte 147 positionnée sur l'électrode 143₂. Le passage de la goutte 147 sur l'électrode 143₂ provoque l'inclusion d'une matrice de micro-gouttes du liquide environnant comme le montre la figure 13B.

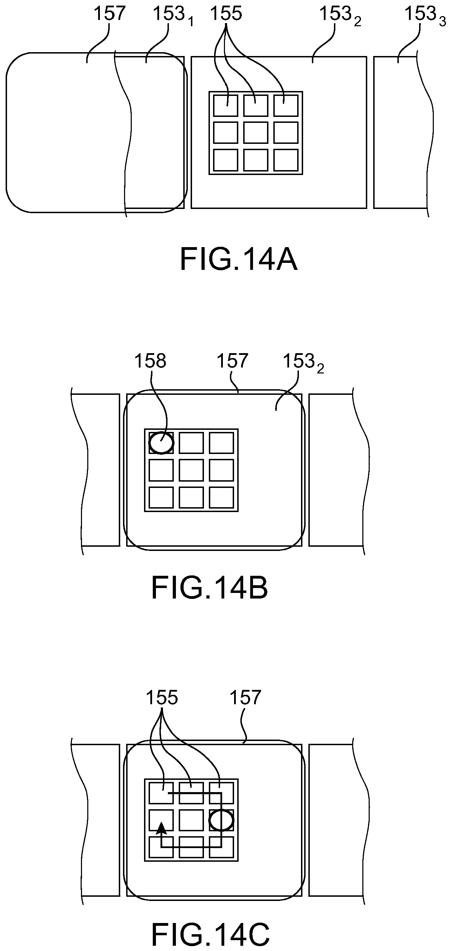

Le dispositif représenté aux figures 14A à 14C reprend la disposition matricielle de défauts de l'exemple d'application précédent, mais en ajoutant une électrode individuelle à chaque défaut. Ces électrodes peuvent être indépendantes ou non, c'est-à-dire qu'elles peuvent être activées indépendamment les unes des autres. De cette manière, il est possible d'activer sélectivement chaque inclusion ainsi formée. Par ailleurs, en activant ou non les électrodes des défauts pendant le déplacement de la goutte, il est possible de sélectionner les éléments de la matrice de défauts où seront formées les inclusions.

Sur les figures 14A à 14C, le substrat support n'a pas été représenté. On y voit trois électrodes 153₁, 153₂ et 153₃ alignées dans le sens d'avancement d'une goutte. L'électrode 153₂ possède une ouverture centrale dans laquelle est disposée une matrice de neufs électrodes 155 disposées en trois lignes et trois colonnes. La figure 14A montre une goutte 157 positionnée sur l'électrode 153₁, le système étant par exemple plongé dans l'huile. La goutte 157 est amenée, à proximité de l'électrode 153₂ par électromouillage. L'électrode 153₂ est activée ainsi que toute la matrice des électrodes 155 sauf, par exemple, l'une des électrodes 155. Ainsi, il se forme une inclusion du liquide environnant la goutte 157, l'inclusion étant positionnée sur l'électrode non activée 155. Il s'agit par exemple de la micro-goutte 158 visible sur la figure 14B. En activant séquentiellement les électrodes 155, il est possible de déplacer, par électromouillage, la micro-goutte 158 dans la goutte 157, l'électrode 153₂ restant activée ou non.

Le fait de pouvoir manipuler et déplacer une inclusion de liquide (par exemple de l'huile) est une fonction nouvelle qui peut s'appliquer dans différents domaines. Il est possible, grâce à l'invention, de réaliser une matrice de lentilles optiques sur une petite surface. Cette petite surface est par exemple placée en regard ou au-dessus d'un capteur CCD et à chaque pixel du capteur correspond une lentille. Il est également possible de provoquer un brassage dans la goutte en déplaçant une inclusion (ou plusieurs inclusions) dans la goutte, ce qui entraîne une circulation du fluide de la goutte dans celle-ci. Un brassage ainsi provoqué permet de favoriser la remise en suspension de billes ou de cellules ou permet d'éviter le phénomène de sédimentation. Cette circulation de fluide est contrôlable par le déplacement de l'inclusion. Ainsi, les courants générés dans la goutte peuvent servir à la manipulation de particules ou cellules présentes dans la goutte. En effet, une particule placée à proximité ou en contact avec l'inclusion sera entraînée par le fluide mis en mouvement par le déplacement de l'inclusion. Plusieurs particules peuvent être manipulées et une fonction de concentration de particules au sein de la goutte est ainsi obtenue.

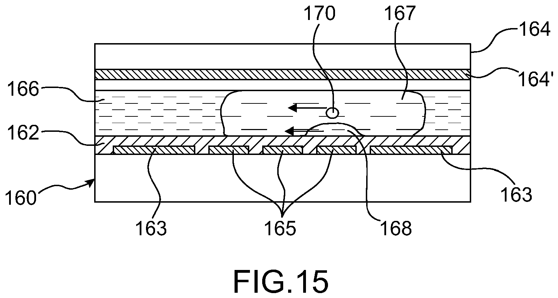

La figure 15 est une vue en coupe transversale d'un dispositif permettant le déplacement de billes par effet d'entraînement de fluide résultant du mouvement d'une inclusion. On y reconnaît un substrat support 160 supportant, entre autres électrodes non représentées, une électrode 163 percée d'une ouverture centrale dans laquelle sont disposées des électrodes individuelles 165. Ces électrodes 165 peuvent être disposées en matrice (comme sur la figure 14A), en ligne ou selon une autre configuration permettant de déplacer par électromouillage une micro-goutte. Les électrodes du substrat support 164 sont englobées dans une couche 162 en matériau diélectrique et hydrophobe. On a représenté également un capot 164 englobant une électrode unique 164' portée au potentiel de la masse et une goutte 167 véhiculée au sein d'un autre liquide 166. Une micro-goutte 168 est incluse dans la goutte 167. Le déplacement de la micro-goutte 168, par activation/désactivation des électrodes 165 provoque, par effet d'entraînement, le déplacement d'une bille 170 transportée par la goutte 167.

## Revendications

1. Procédé de fabrication d'un système diphasique liquide/liquide ou gaz utilisant un premier liquide ou un gaz et un deuxième liquide non miscibles entre eux, comprenant :
- la formation d'une couche de premier liquide (6) ou de gaz sur une première surface hydrophobe,
- l'introduction d'une goutte du deuxième liquide (7) au sein du premier liquide ou du gaz et en contact avec ladite première surface hydrophobe,
- le déplacement de la goutte du deuxième liquide (7) sur ladite première surface hydrophobe selon un trajet déterminé de façon que la goutte du deuxième liquide rencontre au moins un défaut de mouillage (5), le défaut de mouillage provoquant, lors du passage de la goutte du deuxième liquide sur ce défaut, une rupture de la ligne triple de contact de la goutte du deuxième liquide (7) sur la première surface hydrophobe et l'inclusion de premier liquide (8) ou de gaz dans la goutte du deuxième liquide.

2. Procédé selon la revendication 1, dans lequel le déplacement de la goutte du deuxième liquide est obtenu par une activation électrique procurant un effet d'électromouillage.

3. Procédé selon la revendication 2, dans lequel l'activation électrique est réalisée par des moyens d'activation électrique qui comprennent une succession d'électrodes (3) comprises dans ou sur un support (1) présentant une couche diélectrique dont une surface constitue la première surface hydrophobe, la succession d'électrodes étant disposée selon ledit trajet déterminé.

4. Procédé selon l'une des revendications 2 et 3, dans lequel une deuxième surface hydrophobe disposée en regard de la première surface hydrophobe vient former un système fermé ou confiné pour la couche de premier liquide ou de gaz.

5. Procédé selon la revendication 4, dans lequel l'activation électrique exploite une contre-électrode comprise dans ou déposée sur un support isolant (4) dont une surface constitue la deuxième surface hydrophobe, la contre-électrode étant disposée selon ledit trajet déterminé.

6. Procédé selon l'une quelconque des revendications 2 à 5, dans lequel le défaut de mouillage (5) est un défaut topologique présent sur la première surface hydrophobe.

7. Procédé selon la revendication 6, dans lequel le défaut topologique est choisi parmi une protubérance (5), un trou et une zone rugueuse.

8. Procédé selon l'une quelconque des revendications 2 à 5, dans lequel le défaut de mouillage est un défaut de mouillage de la première surface hydrophobe.

9. Procédé selon la revendication 8, dans lequel le défaut de mouillage est un défaut permanent réalisé sur la première surface hydrophobe ou un défaut momentané provoqué sur la première surface hydrophobe.

10. Procédé selon la revendication 3, dans lequel le défaut de mouillage résulte de la présence d'une électrode supplémentaire dans la succession d'électrodes ou de l'absence d'une électrode dans la succession d'électrodes.

11. Procédé selon la revendication 1, dans lequel le déplacement de la goutte du deuxième liquide est obtenu par une action mécanique sur la goutte du deuxième liquide.

12. Procédé selon la revendication 11, dans lequel l'action mécanique sur la goutte du deuxième liquide est réalisée au moyen d'une pompe.

13. Procédé selon l'une des revendications 11 ou 12, dans lequel le défaut de mouillage est un défaut topologique présent sur la première surface hydrophobe.

14. Procédé selon la revendication 13, dans lequel le défaut topologique est choisi parmi une protubérance, un trou et une zone rugueuse.

15. Procédé selon l'une des revendications 11 ou 12, dans lequel le défaut de mouillage est un défaut de mouillage de la première surface hydrophobe.

16. Procédé selon la revendication 15, dans lequel le défaut de mouillage est un défaut permanent réalisé sur la première surface hydrophobe ou un défaut momentané provoqué sur la première surface hydrophobe.

17. Procédé selon l'une quelconque des revendications 11 à 16, dans lequel une deuxième surface hydrophobe disposée en regard de la première surface hydrophobe vient former un système fermé ou confiné pour la couche de premier liquide ou de gaz.

## Patentansprüche

1. Verfahren zur Herstellung eines Flüssig/Flüssig- bzw. Flüssig/Gas-Zweiphasensystems unter Verwendung einer ersten Flüssigkeit bzw. eines Gases und einer zweiten Flüssigkeit, die nicht miteinander mischbar sind, umfassend:
- Bilden einer Schicht aus erster Flüssigkeit (6) bzw. Gas auf einer ersten hydrophoben Oberfläche,
- Einbringen eines Tropfens der zweiten Flüssigkeit (7) in die erste Flüssigkeit bzw. in das Gas in Kontakt mit der ersten hydrophoben Oberfläche,
- Verdrängen des Tropfens der zweiten Flüssigkeit (7) auf der ersten hydrophoben Oberfläche entlang einen vorbestimmten Strecke, so dass der Tropfen der zweiten Flüssigkeit auf mindestens einen Benetzungsdefekt (5) trifft, wobei der Benetzungsdefekt beim Passieren des Tropfens der zweiten Flüssigkeit über diesen Defekt eine Unterbrechung der dreifachen Kontaktlinie des Tropfens der zweiten Flüssigkeit (7) auf der ersten hydrophoben Oberfläche und den Einschluss von erster Flüssigkeit (8) bzw. Gas in den Tropfen der zweiten Flüssigkeit verursacht.

2. Verfahren nach Anspruch 1, wobei die Verdrängung des Tropfens der zweiten Flüssigkeit durch elektrische Aktivierung erreicht wird, die einen Elektrobenetzungseffekt bewirkt.

3. Verfahren nach Anspruch 2, wobei die elektrische Aktivierung durch elektrische Aktivierungsmittel erfolgt, die eine Folge von Elektroden (3) aufweisen, die in oder auf einem Träger (1) mit einer dielektrischen Schicht enthalten sind, von der eine Oberfläche die erste hydrophobe Oberfläche bildet, wobei die Folge von Elektroden entlang der bestimmten Strecke angeordnet ist.

4. Verfahren nach einem der Ansprüche 2 und 3, wobei eine zweite hydrophobe Oberfläche, die der ersten hydrophoben Oberfläche gegenüberliegend angeordnet ist, ein geschlossenes bzw. abgeschlossenes System für die Schicht aus erster Flüssigkeit bzw. Gas bildet.

5. Verfahren nach Anspruch 4, wobei die elektrische Aktivierung über eine Gegenelektrode erfolgt, die in einem isolierenden Träger (4) enthalten oder auf diesem aufgebracht ist, von dem eine Oberfläche die zweite hydrophobe Oberfläche bildet, wobei die Gegenelektrode entlang der bestimmten Strecke angeordnet ist.

6. Verfahren nach einem der Ansprüche 2 bis 5, wobei der Benetzungsdefekt (5) ein topologischer Defekt ist, der auf der ersten hydrophoben Oberfläche vorhanden ist.

7. Verfahren nach Anspruch 6, wobei der topologische Defekt ausgewählt ist aus einem Vorsprung (5), einem Loch und einem Unebenheitsbereich.

8. Verfahren nach einem der Ansprüche 2 bis 5, wobei der Benetzungsdefekt ein Benetzungsdefekt der ersten hydrophoben Oberfläche ist.

9. Verfahren nach Anspruch 8, wobei der Benetzungsdefekt ein auf der ersten hydrophoben Oberfläche gebildeter dauerhafter Defekt oder ein auf der ersten hydrophoben Oberfläche verursachter momentaner Defekt ist.

10. Verfahren nach Anspruch 3, wobei der Benetzungsdefekt aus dem Vorhandensein einer zusätzlichen Elektrode in der Elektrodenfolge oder dem Fehlen einer Elektrode in der Elektrodenfolge resultiert.

11. Verfahren nach Anspruch 1, wobei das Verdrängen des Tropfens der zweiten Flüssigkeit durch eine mechanische Einwirkung auf den Tropfen der zweiten Flüssigkeit erreicht wird.

12. Verfahren nach Anspruch 11, wobei die mechanische Einwirkung auf den Tropfen der zweiten Flüssigkeit mittels einer Pumpe erfolgt.

13. Verfahren nach einem der Ansprüche 11 oder 12, wobei der Benetzungsdefekt ein topologischer Defekt ist, der auf der ersten hydrophoben Oberfläche vorhanden ist.

14. Verfahren nach Anspruch 13, wobei der topologische Defekt ausgewählt ist aus einem Vorsprung, einem Loch und einem Unebenheitsbereich.

15. Verfahren nach einem der Ansprüche 11 oder 12, wobei der Benetzungsdefekt ein Benetzungsdefekt der ersten hydrophoben Oberfläche ist.

16. Verfahren nach Anspruch 15, wobei der Benetzungsdefekt ein auf der ersten hydrophoben Oberfläche gebildeter dauerhafter Defekt oder ein auf der ersten hydrophoben Oberfläche verursachter momentaner Defekt ist.

17. Verfahren nach einem der Ansprüche 11 bis 16, wobei eine zweite hydrophobe Oberfläche, die der ersten hydrophoben Oberfläche gegenüberliegend angeordnet ist, ein geschlossenes bzw. abgeschlossenes System für die Schicht aus erster Flüssigkeit bzw. Gas bildet.

## Claims

1. A method for making a liquid/liquid or gas biphasic system using a first liquid or a gas and a second liquid non-miscible with each other, comprising:
- forming a first liquid (6) or gas layer on a first hydrophobic surface,
- introducing a drop of the second liquid (7) within the first liquid or gas and in contact with said first hydrophobic surface,
- displacing the drop of the second liquid (7) on said first hydrophobic surface along a determined path so that the drop of the second liquid encounters at least one wetting defect (5), the wetting defect causing, upon passing of the drop of the second liquid over this defect, failure of the triple line of contact of the drop of the second liquid (7) on the first hydrophobic surface and inclusion of first liquid (8) or gas in the drop of the second liquid.

2. The method according to claim 1, wherein the displacement of the drop of the second liquid is obtained by electrical activation providing an electro-wetting effect.

3. The method according to claim 2, wherein the electrical activation is performed by electrical activation means which comprise a succession of electrodes (3) comprised in or on a support (1) having a dielectric layer, a surface of which forms the first hydrophobic surface, the succession of electrodes being positioned along said determined path.

4. The method according to one of claims 2 and 3, wherein a second hydrophobic surface is positioned facing the first hydrophobic surface so as to form a closed or confined system for the first liquid or gas layer.

5. The method according to claim 4, wherein the electrical activation uses a counter-electrode comprised in or deposited on an insulating support (4), a surface of which forms the second hydrophobic surface, the counter-electrode being positioned along said determined path.

6. The method according to any of claims 2 to 5, wherein the wetting defect (5) is a topological defect present on the first hydrophobic surface.

7. The method according to claim 6, wherein the topological defect is selected from a protrusion (5), a hole or a rough area.

8. The method device according to any of claims 2 to 5, wherein the wetting defect is a wetting defect of the first hydrophobic surface.

9. The method according to claim 8, wherein the wetting defect is a permanent defect produced on the first hydrophobic surface or a momentary defect caused on the first hydrophobic surface.

10. The method according to claim 3, wherein the wetting defect results from the presence of an additional electrode in the succession of electrodes or from the absence of an electrode in the succession of electrodes.

11. The method according to claim 1, wherein the displacement of the drop of the second liquid is obtained by mechanical action on the drop of the second liquid.

12. The method according to claim 11, wherein the mechanical action on the drop of the second liquid is exerted by means of a pump.

13. The method according to any of claims 11 or 12, wherein the wetting defect is a topological defect present on the first hydrophobic surface.

14. The method according to claim 13, wherein the topological defect is selected from a protrusion, a hole or a rough area.

15. The method according to any of claims 11 or 12, wherein the wetting defect is a wetting defect of the first hydrophobic surface.

16. The method according to claim 15, wherein the wetting defect is a permanent defect produced on the first hydrophobic surface or a momentary defect caused on the first hydrophobic surface.

17. The method according to any of claims 11 to 16, wherein a second hydrophobic surface is positioned facing the first hydrophobic surface so as to form a closed or confined system for the first liquid or gas layer.
